# EUROPÄISCHE PATENTANMELDUNG

(11) **EP 4 567 537 A1**
(43) Veröffentlichungstag der Anmeldung: **11.06.2025**
(21) Anmeldenummer: 24210952.8
(22) Anmeldetag: 05.11.2024
(51) Int. Cl.: G05B 23/02, G08B 29/12, G08B 29/14, G08B 29/04, G08B 29/06

(54) **VERFAHREN ZUR INSPEKTION DES INSTALLATIONSZUSTANDS VON MINDESTENS EINEM SYSTEMKOMPONENTE IN EINER BRANDMELDEANORDNUNG, BRANDMELDEANORDNUNG, MONITORZENTRALE, COMPUTERPROGRAMM UND SPEICHERMEDIUM**

(30) Priorität: 30.11.2023 DE 102023212015
(71) Anmelder: Robert Bosch GmbH, 70442 Stuttgart (DE)
(72) Erfinder: Hanses, Thomas, 83620 Feldkirchen-Westerham (DE); Wehr, Sebastian, 81539 Muenchen (DE); Stauber, Johannes, 83043 Bad Aibling (DE)

(57) **Zusammenfassung**

Die Erfindung betrifft ein Verfahren zur Inspektion des Installationszustands von mindestens einer Systemkomponente (4) in einer Brandmeldeanordnung (1), wobei die Brandmeldeanordnung (1) ein Brandmeldesystem (2), wobei das Brandmeldesystem (2) eine Vielzahl der Systemkomponenten (4) aufweist, sowie eine Monitorzentrale (3) umfasst, wobei die Monitorzentrale (3) eine Ferninspektion des Installationszustands der Systemkomponente (4) auf Basis von Inspektionsdaten durchführt, wobei die Monitorzentrale (3) eine Statusdatenbank (8) aufweist, wobei für die inspizierte Systemkomponente (4) in der Statusdatenbank (8) eine Periodengesamtbewertung für eine Überwachungsperiode (100) eingetragen wird, wobei die Periodengesamtbewertung als i.O.- Periodengesamtbewertungszustand gesetzt wird, wenn die inspizierte Systemkomponente (4) sich in einem vorgebbaren Installationszustand befindet und als n.i.O.- Periodengesamtbewertungszustand gesetzt wird, wenn sich die inspizierte Systemkomponente (4) nicht in dem vorgebbaren Installationszustand befindet. Die Erfindung betrifft auch eine Brandmeldeanordnung, eine Monitorzentrale, ein Computerprogramm und Speichermedium.

## Beschreibung

Die Erfindung betrifft ein Verfahren zur Inspektion des Installationszustands von mindestens einer Systemkomponente in einer Brandmeldeanordnung mit den Merkmalen des Anspruchs 1. Die Erfindung betrifft auch eine Brandmeldeanordnung, eine Monitorzentrale, ein Computerprogramm und Speichermedium.

### Stand der Technik

Brandmeldeanlagen haben die Primärfunktion, Brände in Gebäuden oder Bereichen zu detektieren und einen Alarm auszulösen. Neben dieser Primärfunktion verlangen Brandmeldeanlagen eine Wartung, so dass jederzeit sichergestellt ist, dass sich die Brandmeldeanlage in einem betriebsbereiten Zustand befindet.

Zur Prüfung von Brandmelder werden oftmals manuelle Prüfvorrichtungen eingesetzt, welche als tragbare Vorrichtung ausgebildet sind und welche eine Glocke aufweisen, die über die jeweiligen Brandmelder gestülpt wird und mit einem Prozessgas beströmt werden kann, um einen Brand zu simulieren und einen Prüfalarm auszulösen.

Die Druckschrift DE 10 2009 046 556 B4 offenbart beispielsweise eine Brandmeldevorrichtung mit einer Prüfeinrichtung. Die Prüfeinrichtung weist einen Gasvorratsbehälter für ein Prüfgas auf, wobei die Prüfeinrichtung ausgebildet ist, dass Prüfgas in den Sensorerfassungsbereich der Brandmeldevorrichtung zu bringen, so dass das Prüfgas die brandspezifische Umgebungsgröße simuliert und ein Prüfalarm ausgelöst wird.

### Offenbarung der Erfindung

Gegenstand der Erfindung ist ein Verfahren zur Inspektion des Installationszustands von mindestens einen Systemkomponente in einer Brandmeldeanordnung mit den Merkmalen des Anspruchs 1. Die Erfindung betrifft auch eine Brandmeldeanordnung und/oder Monitorzentrale mit den Merkmalen des Anspruchs 16, ein Computerprogramm mit den Merkmalen des Anspruchs 17 sowie ein Speichermedium mit den Merkmalen des Anspruchs 18.

Bevorzugte oder vorteilhafte Ausführungsformen der Erfindung ergeben sich aus den Unteransprüchen, der nachfolgenden Beschreibung sowie den beigefügten Figuren.

Die Brandmeldeanordnung weist ein Brandmeldesystem auf, wobei das Brandmeldesystem eine Vielzahl von Systemkomponenten umfasst. Das Brandmeldesystem umfasst Systemkomponenten für einen Überwachungsbereich. Der Überwachungsbereich kann als ein zusammenhängender oder als ein nicht zusammenhängender Bereich in einem Raum- oder Flächenkomplex ausgebildet sein. Beispielsweise ist das Überwachungssystem in einem Gebäudekomplex, in einer Lagerhalle, etc. angeordnet. Das Brandmeldesystem kann auch dazu dienen, größere öffentliche Bereiche, wie zum Beispiel Bahnhöfe, Flughäfen, etc. als Überwachungsbereich zu überwachen.

Die Systemkomponente kann eine beliebige Komponente in dem Brandmeldesystem, wie z.B. einen Signalgeber, eine Batterie etc. bilden. Bevorzugt umfasst die Systemkomponente mindestens einen Sensor zur Überwachung des Überwachungsbereichs und/oder zur Selbstüberwachung. Im erstgenannten Fall ist der Erfassungsbereich des Sensors in den Überwachungsbereich gerichtet. In dem zweiten genannten Fall ist der Erfassungsbereich des Sensors in die Systemkomponente selbst gerichtet. Allerdings kann es auch zu Überschneidungen kommen, sodass der Sensor zur Selbstüberwachung auch Signale aus dem Überwachungsbereich oder der Sensor zur Überwachung des Überwachungsbereichs auch Signale aus der Systemkomponente oder aus dem Überwachungssystem selbst empfängt. Es können auch mehrere derartige Sensoren in der Systemkomponente vorgesehen sein.

Das Brandmeldesystem umfasst bevorzugt genau eine oder mindestens eine Brandmeldezentrale, wobei die Brandmeldezentrale über ein erstes Netzwerk mit den Systemkomponenten verbunden ist. Das Brandmeldesystem ist derart ausgebildet, dass Daten über das erste Netzwerk von den Systemkomponenten an die Brandmeldezentrale übertragen werden können. Optional sind die Brandmeldezentralen untereinander über ein weiteres Netzwerk, insbesondere ein LAN miteinander verbunden.

Die Brandmeldezentrale ist zur Ausgabe eines Brandalarms ausgebildet. Die Ausgabe des Brandalarms kann beispielsweise über eine signaltechnisch verbundene Sirene oder optische Warneinrichtung erfolgen. Es ist auch möglich, dass die Ausgabe des Brandalarms über eine Schnittstelle an Rettungskräfte weitergeleitet wird.

Die Brandmeldeanordnung weist eine Monitorzentrale auf. Die Monitorzentrale kann datentechnisch in dem ersten Netzwerk integriert sein und/oder wird durch die Brandemeldezentrale mitgebildet. Bevorzugt ist das Brandmeldesystem über ein zweites Netzwerk mit der Monitorzentrale verbunden, wobei die Monitorzentrale zur Überwachung eines Installationszustands der Systemkomponenten geeignet und/oder ausgebildet ist. Insbesondere ist die Monitorzentrale in der Cloud implementiert.

Die Monitorzentrale führt eine Ferninspektion des Installationszustands der Systemkomponenten auf Basis von Inspektionsdaten durch.

Unter einem Installationszustand ist insbesondere der Betriebszustand der Systemkomponente in der Brandmeldeanordnung zu verstehen, sodass zu dem Installationszustand neben dem Funktionszustand der Systemkomponente als auch der Kommunikationszustand der Systemkomponente in der Brandmeldeanordnung zählen kann. Unter Inspektionsdaten sind Daten zu verstehen, die den Installationszustand der Systemkomponente repräsentieren.

Es ist ein Vorteil, wenn die Brandmeldeanordnung von der Architektur betrachtet in zwei Bereiche unterteilt wird. Ein erster Bereich, insbesondere mit dem ersten Netzwerk, welcher die Systemkomponenten und optional die Brandmeldezentrale umfasst, dient zur Ausgabe des Brandalarms. Insbesondere ist dieser erste Bereich echtzeitfähig ausgebildet, wobei die Echtzeit dadurch definiert ist, dass eine Reaktion auf einen durch einen der Systemkomponenten detektierten Brand innerhalb von weniger als 10 Sekunden erfolgt. Die Brandmeldeanordnung umfasst einen zweiten Bereich, insbesondere mit dem zweiten Netzwerk, welcher zur Überwachung des Installationszustands des ersten Bereichs geeignet und/oder ausgebildet ist. Dieser zweite Bereich muss die harte Echtzeitanforderung des ersten Bereichs nicht erfüllen. So ist es beispielsweise denkbar, dass eine Reaktion auf einen aufgefundenen, kritischen Installationszustand der Systemkomponenten und/oder der Brandmeldezentrale zumindest in Einzelfällen später als 15 Minuten nach Detektion, insbesondere später als 30 Minuten nach Detektion und im Speziellen später als 60 Minuten nach Detektion erfolgt.

Dementsprechend ist es bevorzugt, dass das erste Netzwerk echtzeitfähig ist, um den Brandalarm unverzögert auszugeben, wohingegen die Anforderungen an das zweite Netzwerk geringer ausfallen können. Durch die Aufteilung der Funktionen Brandüberwachung einerseits und Installationsüberwachung andererseits kann die Komplexität der Brandmeldeanordnung vermindert werden, indem echtzeitunkritische Funktionen von den echtzeitkritischen Funktionen getrennt werden. Durch eine derartige Architektur kann zum einen die Überwachung durch das Brandmeldesystem hinsichtlich von Bränden verbessert und zum anderen die Überwachung hinsichtlich eines Installationszustands vereinfacht werden.

Bei einer bevorzugten Ausgestaltung der Erfindung ist vorgesehen, dass das zweite Netzwerk zumindest in einem Verbindungsabschnitt zwischen dem Brandmeldesystem und der Monitorzentrale als eine Internetverbindung ausgebildet ist. Internetverbindungen leiden heutzutage in öffentlichen Netzen immer wieder an Verbindungsausfällen, was jedoch bei der Überwachung hinsichtlich eines Installationszustands der Systemkomponenten tolerierbar ist. Auf diese Weise ist die Brandmeldeanordnung vergleichsweise einfach zu installieren und zu betreiben.

Bei einer möglichen Ausführungsform der Erfindung weist das zweite Netzwerk in einem Verbindungsabschnitt zwischen dem Brandmeldesystem und der Monitorzentrale ein privates IP-Netz auf. Derartige private IP-Netze - auch Sicherheitsnetzwerke genannt - nutzen ADSL-, SDSL-, GPRS-, EDGE-, UMTS-, HSDPA+/--Technik. In den privaten IP-Netzen sind die Netzwerkpartner aus dem öffentlichen Internet nicht erreichbar und somit gegen gefährliche Angriffe aus dem weltweiten Netz geschützt. Ein Beispiel für ein derartiges privates IP-Netz ist das BOSINET-NGN der Anmelderin.

Bei einer bevorzugten konstruktiven Ausgestaltung der Erfindung ist vorgesehen, dass die Monitorzentrale dezentral angeordnet ist und insbesondere mehr als 10 km, vorzugsweise mehr als 50 km und insbesondere mehr als 100 km von dem Brandmeldesystem entfernt angeordnet ist. Diese Ausgestaltung wird erst durch die Funktionstrennung Brandüberwachung/Installationszustandsüberwachung ermöglicht, da es problemlos ist, Inspektionsdaten auch über weite Entfernungen zu transportieren oder über weite Datenwege einzuholen.

Dagegen ist es bevorzugt, dass das erste Netzwerk, welches die das Brandmeldesystem verbindet, als ein Sicherheitsnetzwerk ausgebildet ist. Insbesondere ist das erste Netzwerk als ein digitales Feldbussystem ausgebildet. Beispielsweise ist das erste Netzwerk als ein so genanntes LSN (Local Security Network) realisiert. Der LSN-Bus ist als ein 2-Draht-System ausgebildet, welcher über Pulsweitenmodulation kodierte Informationen überträgt. Derartige 2-Draht-Leitungen in dem ersten Netzwerk weisen einen sehr hohen Sicherheitsstandard auf, da diese in verschiedenen Netztopologien verfügbar.

Die Monitorzentrale weist eine Statusdatenbank auf, wobei für die inspizierte Systemkomponente, also für die Systemkomponente, für die eine Ferninspektion durchgeführt wird, in der Statusdatenbank eine Periodengesamtbewertung für eine Überwachungsperiode eingetragen wird. Insbesondere bildet die Periodengesamtbewertung eine Kenngröße für die gesammelte Überwachungsperiode und bildet damit eine Auswertung für die Überwachungsperiode. Die Überwachungsperiode ist insbesondere größer als ein Monat, vorzugsweise größer gleich 3 Monate, im speziellen größer gleich ein Jahr ausgebildet. Durch die Statusdatenbank und die eingetragenen Person Periodengesamtbewertung in kann somit der Installationszustand der Systemkomponenten in der Brandmeldeanordnung in einfacher Weise kontrolliert und dokumentiert werden.

Bevorzugt weist die Monitorzentrale ein Protokollmodul auf, in dem die Periodengesamtbewertung für die Überwachungsperiode, insbesondere nach oder mit Abschluss der Überwachungsperiode, dokumentiert, insbesondere festgeschrieben wird. Insbesondere wird durch das Protokollmodul eine fälschungssichere, unveränderbare und/oder manipulationssichere Protokollierung durchgeführt. Das Protokollmodul kann einen Teil der Statusdatenbank bilden.

Die Periodengesamtbewertung wird als i.O.-Periodengesamtbewertungszustand gesetzt, wenn die inspizierte Systemkomponente sich in einem vorgebbaren Installationszustand befindet und als n.i.O.-Periodengesamtbewertungszustand gesetzt, wenn die inspizierte Systemkomponente außerhalb des vorgebbaren Installationszustand und/oder sich nicht in dem vorgebbaren Installationszustand befindet.

Es ist dabei eine Überlegung der Erfindung, dass die Systemkomponenten zur Sicherung der Betriebsfähigkeit der Brandmeldeanordnung regelmäßig kontrolliert werden müssen.

Für die Kontrolle von Systemkomponenten in Brandmeldeanordnung gibt es zudem öffentliche Vorschriften. Die Installation und der Betrieb von Brandmeldesystemen ist durch Bauverordnungen und Brandschutzverordnungen der jeweiligen Bestimmungsländer vorgeschrieben. Die in Deutschland geltenden Normen und Vorschriften gelten als die weitläufigsten und strengsten Vorschriften in dem Bereich der Brandmeldetechnik. Aus diesem Grund werden vorliegend die Deutschen Normen und Vorschriften herangezogen. Dadurch werden auch weltweit geltende lokale Vorschriften abgedeckt, bzw. übererfüllt. In Deutschland gelten:
DIN VDE 0833 Gefahrenmeldeanlagen für Brand, Einbruch und Überfall - Teil 1: Allgemeine Festlegungen sowie DIN 14675-1:2020-01 Brandmeldeanlagen - Teil 1: Aufbau und Betrieb. Beide Richtlinien legen fest, wie Brandmeldesysteme in Deutschland betrieben und somit auch gewartet und instandgehalten werden müssen. Die Anforderungen aus den beiden Richtlinien bilden die Anforderungen an Selbsttesteinrichtungen, wie die erfindungsgemäße Monitorzentrale im Verbund der Brandmeldeanordnung.

VdS 3860 Selbsttesteinrichtungen für Bestandteile der Brandmeldetechnik Die VdS-Richtlinie wurde von dem Verband der deutschen Sachversicherer erstellt, um die Qualität von Selbsttesteinrichtungen als außenstehendes Institut zu beurteilen. Der Verband vergibt ein Prüfsigel, dass die Erfüllung der Testvorgaben nach deutschen Vorgaben beurteilt. Nach Vorgaben der DIN VDE 0833-1 muss ein Brandmeldesystem in jedem Quartal durch einen geschulten Techniker inspiziert werden. Durch die in den Vorschriften aufgeführten Prüfungen, soll die Funktion des Brandmeldesystems sichergestellt werden. Hierbei soll erkannt werden, ob äußere Einflüsse oder Alterungsprozesse die Funktion des Systems negativ beeinträchtigen. Jeder automatische Melder, insbesondere Brandmelder muss einmal pro Jahr erfolgreich geprüft werden.

Üblicherweise muss die Kontrolle, insbesondere die jährliche Kontrolle, vor Ort durchgeführt werden, um den öffentlichen Anforderungen zu genügen. Es wurde jedoch festgestellt, dass durch das erfindungsgemäß vorgeschlagene Verfahren eine manuelle vor Ort-Kontrolle eingespart werden kann, wenn eine entsprechende Ferninspektion des Installationszustands der Systemkomponente durchgeführt wird und die Inspektionsergebnisse entsprechend in der Statusdatenbank zusammengefasst und optional ergänzend in dem Protokollmodul insbesondere unveränderbar und/oder manipulationssicher gespeichert werden können. Durch das Verfahren wird somit erreicht, dass manuelle vor Ort-Kontrollen reduziert oder vorzugsweise vollständig eingespart werden können, indem eine hinreichende Ferninspektion des Installationszustands durch die Monitorzentrale durchgeführt werden kann.

Auf diese Weise wird zum einen technisch betrachtet, die Betriebsfähigkeit der Brandmeldeanordnung mit einer höheren Sicherheit geprüft und dokumentiert und auf der anderen Seite öffentliche Vorgaben der jeweiligen Länder, in denen die Brandmeldeanordnung installiert ist oder diesem zugeordnet ist, die wiederum die technischen Vorgaben für die Betriebsfähigkeit der Brandmeldeanordnung widerspiegeln, erfüllt.

Bei einer bevorzugten Weiterbildung der Erfindung werden für die Systemkomponente in der Statusdatenbank mehrere Intervallgesamtbewertungen der Systemkomponente für ein Überwachungsintervall eingetragen. Die Überwachungsperiode weist mehrere Überwachungsintervalle auf. Beispielsweise weist die Überwachungsperiode mehr als zwei, insbesondere vier Überwachungsintervalle auf. Um die Daten in der Statusdatenbank ausreichend übersichtlich zusammenzufassen, weist die Überwachungsperiode weniger als 20 Überwachungsintervalle, insbesondere weniger oder gleich 12 Überwachungsintervalle und im Speziellen 4 Überwachungsintervalle auf.

Die Intervallgesamtbewertung wird als i.O.-lntervallgesamtbewertungszustand gesetzt, wenn die inspizierte Systemkomponente sich in dem vorgebbaren Installationszustand befindet und als n.i.O.-lntervallgesamtbewertungszustand gesetzt, wenn die inspizierte Systemkomponente sich nicht in dem vorgebbaren Installationszustand befindet.

Es ist bevorzugt vorgesehen, dass die Periodengesamtbewertung als i.O.-Periodengesamtbewertungszustand gesetzt wird, wenn wenigstens einer der Intervallgesamtbewertungen in der Überwachungsperiode als i.O.-Intervallgesamtbewertungszustand gesetzt ist. Durch diese Systematik kann ausgeschlossen werden, dass durch einen einzelnen n.i.O.-Intervallgesamtbewertungszustand die Periodengesamtbewertung bereits auf den n.i.O.-Periodengesamtbewertungszustand gesetzt wird, vielmehr kann durch nachfolgende i.O.-lntervallgesamtbewertungszustände doch noch der i.O.-Periodengesamtbewertungszustand erreicht wird.

Optional ergänzend kann vorgesehen sein, dass die Intervallgesamtbewertung stets als n.i.O.-lntervallgesamtbewertungszustand gesetzt wird, wenn die letzte Intervallgesamtbewertung der Überwachungsperiode als n.i.O.-Intervallgesamtbewertungszustand gesetzt ist. Eine Ausnahme kann somit dadurch gebildet werden, dass das letzte Überwachungsintervall als n.i.O.-Intervallgesamtbewertungszustand gesetzt wird, da es eine zusätzliche Sicherheit bringt, wenn bei einem Auslaufen der Überwachungsperiode mit einem n.i.O.-Intervallgesamtbewertungszustand ausnahmsweise die Periodengesamtbewertung auf n.i.O.-Periodengesamtbewertungszustand gesetzt wird.

Die Überwachungsperiode und/oder die Überwachungsintervalle können zum einen technisch sinnvoll gesetzt werden, zum anderen können diese an gesetzliche Regularien angepasst werden. So ist es bevorzugt, dass die Überwachungsperiode einem Jahr entspricht. Dabei kann vorgesehen sein, dass das Jahr als Kalenderjahr ausgebildet ist alternativ hierzu wird eine jeweilige Überwachungsperiode und/oder die erste Überwachungsperiode gestartet, wenn die jeweilige Systemkomponente erstmals installiert und/oder aktiviert wird. Alternativ oder ergänzend ist es bevorzugt, dass die Überwachungsintervalle mehr als einen Monat voneinander beabstandet sind und/oder das vier Überwachungsintervalle pro Jahr vorgesehen sind. Diese Auswahl führt zu einer besonders übersichtlichen Bedienbarkeit der Brandmeldeanordnung hinsichtlich der Inspektion des Installationszustands.

Vorzugsweise weisen alle Systemkomponenten die gleiche Überwachungsperiode und/oder die gleichen Überwachungsintervalle auf, wobei diese jeweils die gleichen absoluten Zeiträume betreffen.

Bei einer bevorzugten Weiterbildung der Erfindung bilden die Periodengesamtbewertung und/oder die Intervallgesamtbewertung eine Gesamtbewertung, welche nachfolgend ausgeführt wird. Somit kann die Gesamtbewertung als Periodengesamtbewertung und/oder als Intervallgesamtbewertung ausgebildet sein.

Die Gesamtbewertung wird aus einer Mehrzahl von Einzelbewertungen gebildet, wobei ein n.i.O.-Einzelbewertungszustand als Einzelbewertung automatisch zu einem n.i.O.-Gesamtbewertungszustand als Gesamtbewertung führt. Auf diese Weise ist es möglich, für jede Systemkomponenten eine Auswahl von Einzelbewertungen zu bilden, welche so gewählt ist, dass die Systemkomponente hinsichtlich der Inspektion des Installationszustands ausreichend inspiziert wird.

Bevorzugt ist, dass ein i.O.-Gesamtbewertungszustand als Gesamtbewertung und/oder ein n.i.O.-Einzelbewertungszustand als Einzelbewertung automatisiert aktualisiert werden kann, so dass bei einer neuen Ferninspektion des Installationszustands der Systemkomponente eine positive Einzelbewertung und/oder Gesamtbewertung wieder zu einer i.O.-Einzelbewertungszustand als Einzelbewertung und/oder i.O.-Gesamtbewertungszustand führen kann. Es kann auch vorgesehen sein, dass der i.O.-Gesamtbewertungszustand als Gesamtbewertung und/oder der i.O.-Einzelbewertungszustand als Einzelbewertung in dem aktuellen Überwachungsintervall oder erst in dem nächsten Überwachungsintervall in die Statusdatenbank eingetragen werden kann.

Alternativ oder ergänzend kann ein n.i.O.-Gesamtbewertungszustand als Gesamtbewertung und/oder ein n.i.O.-Einzelbewertungszustand als Einzelbewertung durch eine Nutzerinteraktion geändert werden. Eine derartige Nutzerinteraktion kann beispielsweise erfolgen, wenn nach einem n.i.O.-Einzelbewertungszustand und/oder einem n.i.O.-Gesamtbewertungszustand eine manuelle vor Ort Inspektion der Systemkomponente durchgeführt wird, etwaige Installationsprobleme gelöst werden und nachfolgend durch den Nutzer die Einzelbewertung und/oder die Gesamtbewertung aktualisiert wird.

Bei einer bevorzugten Weiterbildung der Erfindung weist die Brandmeldeanordnung ein Behebungsmodul auf, wobei das Behebungsmodul ausgebildet ist, bei einem n.i.O.-Gesamtbewertungszustand und/oder einer n.i.O.-Einzelbewertungszustand als n.i.O.-Zustand mit einer Interaktionsanfrage eine oder die Nutzerinteraktion zur Behebung der Ursache für den n.i.O.-Zustand anzufordern.

Die Brandmeldeanordnung ist durch das Behebungsmodul so automatisiert, dass durch die Interaktionsanfrage eine automatische Behebung des n.i.O.-Zustands getriggert wird. Die Interaktionsanfrage kann beispielsweise an ein Inspektionsplanungsmodul übergeben werden, wobei das Inspektionsplanungsmodul eine Zuordnung von Interaktionsanfragen zu den Systemkomponenten aufweist. Auf Basis des Inspektionsplanungsmoduls kann der Nutzer selektiv zu der Systemkomponente gelenkt werden, welche den n.i.O.-Zustand aufweist, um diesen manuell vor Ort zu testen und/oder zu kontrollieren. Durch das Zusammenwirken des Behebungsmoduls und des Inspektionsplanungsmoduls wird somit erreicht, dass ein Nutzer manuelle vor Ort-Inspektionen nur dann durchführen muss, wenn das Behebungsmodul eine entsprechende Interaktionsanfrage ausgibt. Bei allen anderen Systemkomponenten muss entsprechend keine vor Ort Inspektion durchgeführt werden.

Es ist dabei bevorzugt, dass die Interaktionsanfrage eine Identifizierungsinformation der Systemkomponente und eine Zustandsinformation über den n.i.O.-Einzelbewertungszustand zugeordnet ist. Somit umfasst die Interaktionsanfrage eine selektive Information, welche Systemkomponente gegebenenfalls vor Ort manuell ziert werden muss und zudem eine spezifische Zustandsinformation, welcher Einzelbewertung eine Neo Einzel Bewertungszustand aufweist, so das die Systemkomponente bevorzugt nur in dem Umfang des n.i.O.-Einzelbewertungszustand vor Ort manuell geprüft werden muss.

Bei dem Verfahren ist bevorzugt vorgesehen, dass nach der erfolgreichen Behebung der Ursache in Bezug auf die Interaktionsanfrage der n.i.O.-Einzelbewertungszustand und der zugeordnete n.i.O.-Gesamtbewertungszustand in dem zugeordneten Überwachungsintervall aufgehoben wird. In diesem Fall wird dann der die Intervall Gesamt Bewertung und/oder die Periodengesamtbewertung auf einen EU Gesamtbewertungszustand gesetzt.

Bevorzugt wird der Einzelbewertungsstatus der Einzelbewertungszustand neu erfasst und/oder manuell eingetragen.

Bei einer bevorzugten Ausgestaltung der Erfindung eine der Einzelbewertungen als ein Monitorverbindungsbewertung zur Bewertung der Datenverbindung zwischen dem Brandmeldesystem und der Monitorzentrale ausgebildet. Insbesondere kann die Monitorverbindungsbewertung eine Datenqualitätsbewertung zur Bewertung der Datenqualität der empfangenen Inspektionsdaten sind Daten in der Monitorzentrale fassen. Primär wird über die Monitorverbindungsbewertung die Datenverbindung zwischen dem Brandmeldesystem und der Monitorzentrale ausgewertet. Hierbei wird insbesondere das zweite Netzwerk bzw. die zweite Netzwerk Verbindung geprüft. Allerdings basieren die Inspektionsdaten auf Daten von der Systemkomponente, so das auch bei der Monitorverbindungsbewertung zugleich die Datenverbindung zwischen der Systemkomponente in dem Brandmeldesystem mit geprüft wird. Für den Fall, dass überhaupt keine Daten Inspektionsdaten von der Systemkomponente empfangen werden können, wird die Monitorverbindungsbewertung als n.i.O.-Monitorverbindungsbewertung gesetzt, unabhängig davon, ob ein etwaiger Datenverlust oder eine etwaige Unterbrechung der Datenverbindung in dem Brandmeldesystem oder zwischen Brandmeldesystem und Monitorzentrale erfolgt.

Alternativ oder ergänzend ist eine der Einzelbewertungen als eine Komponentenfunktionsbewertung zur Bewertung der Funktion der Systemkomponente ausgebildet. Bei der Komponentenfunktionsbewertung wird insbesondere geprüft, ob eine aktive ob ein Sensor in der Systemkomponente einen funktionierenden Betriebszustand aufweist.

Alternativ oder ergänzend ist eine der Einzelbewertungen als eine Systemverbindungsbewertung zur Bewertung der Datenverbindung in dem Brandmeldersystem ausgebildet. Durch die Systemverbindungsbewertung wird insbesondere geprüft, ob die Datenverbindung in dem ersten Netzwerk rationiert.

Bei einer bevorzugten Realisierung der Erfindung ist die Systemkomponente als ein Brandmelder ausgebildet. Der Brandmelder kann eine oder mehrere Sensoren zur Branddetektion oder damit verbundenen Messgrößen, wie zum Beispiel Temperatursensor, Gassensor etc. aufweisen. Es ist besonders bevorzugt, dass die Gesamtbewertung die Monitorverbindungsbewertung, die Komponentenfunktionsbewertung und die System Verbindungsbewertung umfasst. Bei der Komponentenfunktionsbewertung wird insbesondere jeder der Sensoren in der Systemkomponente und/oder in dem Brandmelder über die Ferninspektion geprüft.

Ein weiterer Gegenstand betrifft die Brandmeldeanordnung und/oder die Monitorzentrale, wie diese jeweils zuvor beschrieben wurde zur Ausführung des Verfahrens. Ein weiterer Gegenstand betrifft ein Computerprogramm, welches bei der Ausführung auf einer digitalen Datenverarbeitungseinrichtung und/oder auf der Brandmeldeanordnung das erfindungsgemäße Verfahren durchführt. Ein weiterer Gegenstand betrifft ein digitales Speichermedium zum Speichern des Computerprogramms.

Weitere Merkmale, Vorteile und Wirkungen der Erfindung ergeben sich aus der Beschreibung bevorzugter Ausführungsbeispiele sowie der beigefügten Figuren. Diese zeigen:
Fig. 1 eine Blockdarstellung einer Brandmeldeanordnung als ein Ausführungsbeispiel der Erfindung;
Fig. 2 eine schematische Darstellung von Einträgen in der Statusdatenbank in der Brandmeldeanordnung;
Fig. 3 ein Flussdiagramm zur Erläuterung der Gesamtbewertung aus Einzelbewertungen;
Fig. 4 ein Graph zur Erläuterung der Auswertung einer der Einzelbewertungen.

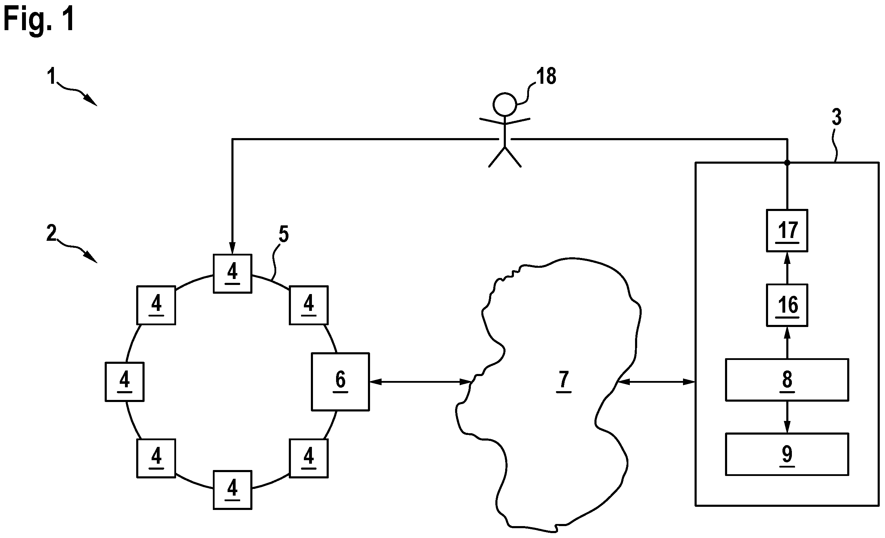

Die Figur 1 zeigt einen schematischen Blockdarstellung eine Brandmeldeanordnung 1 als ein Ausführungsbeispiel der Erfindung. Die Brandmeldeanordnung 1 weist ein Brandmeldesystem 2 sowie eine Monitorzentrale 3 auf. Das Brandmeldesystem 2 umfasst mehrere Systemkomponenten 4, welche über ein erstes Netzwerk 5 miteinander verbunden sind. Optional umfasst das Brandmeldesystem 2 eine Brandmeldezentrale 6, welche ebenfalls mit den Systemkomponenten 4 datentechnisch, insbesondere über das erste Netzwerk 5 verbunden ist.

Das Brandmeldesystem 2 ist über ein zweites Netzwerk 7 mit der Monitorzentrale 3 datentechnisch wie in der Figur 1 gezeigt ist verbunden, wobei das Brandmeldesystem 2 über die Brandmeldezentrale 6 und das zweite Netzwerk 7 mit der Monitorzentrale 3 verbunden ist. Bei abgewandelten Ausführungsbeispielen kann die Monitorzentrale 3 auch ein integraler Bestandteil der Brandmeldezentrale 6 sein oder in das erste Netzwerk 5 integriert sein.

Das Verfahren sieht vor, dass die Monitorzentrale 3 eine Ferninspektion des Installationszustands von mindestens einer Systemkomponente 4, einigen Systemkomponenten 4 oder allen Systemkomponenten 4 in der Brandmeldeanordnung 1 durchführt. Hierzu werden der Monitorzentrale 3 Inspektionsdaten zugeführt, welche den Installationszustand der jeweiligen Systemkomponente 4 beschreiben.

Die Monitorzentrale 3 weist eine Statusdatenbank 8 auf, wobei für die inspizierte Systemkomponente 4 in der Statusdatenbank 8 eine Periodengesamtbewertung für eine Überwachungsperiode eingetragen wird. Optional weist die Monitorzentrale 3 ein Protokollmodul 9 auf, wobei die Periodengesamtbewertung für die Überwachungsperiode für die jeweilige Systemkomponente 4 unveränderbar und/oder fälschungssicher und/oder manipulationssicher dokumentiert und/oder festgeschrieben wird. Das Protokollmodul 9 kann auch integraler Bestandteil der Statusdatenbank 8 sein.

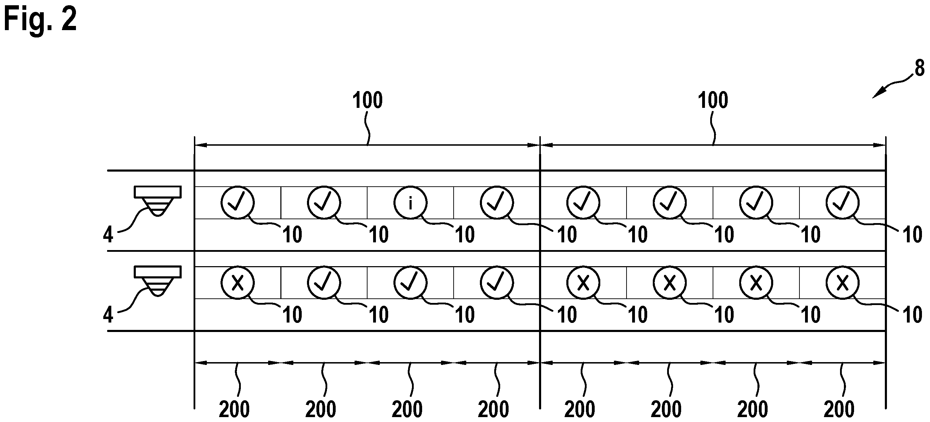

Die Figur 2 zeigt eine schematische Darstellung von Einträgen in der Statusdatenbank 8 für zwei Systemkomponenten 4. Bei dem Verfahren werden in der jeweiligen Überwachungsperiode 100 mehrere Intervallgesamtbewertungen 10 durchgeführt, welche jeweils sich auf ein Überwachungsintervall 200 beziehen. Bei dem vorliegenden Ausführungsbeispiel ist die Überwachungsperiode 100 ein Jahr, die Überwachungsintervalle 200 sind jeweils ein Vierteljahr.

Für jede der Überwachungsintervalle 200 für eine wird Intervallgesamtbewertung 10 als i.O.-lntervallgesamtbewertungszustand gesetzt, wenn die inspizierte Systemkomponente 4 sich in einem vorgebbaren Installationszustand befindet. Für den Fall, dass sich die inspizierte Systemkomponente 4 nicht in dem vorgebbaren Installationszustand befindet wird ein n.i.O.-Intervallgesamtbewertungszustand gesetzt. Die Periodengesamtbewertung wird als i.O.-Periodengesamtbewertungszustand gesetzt, wenn wenigstens einer der Intervallgesamtbewertungen 10 als i.0.-Intervallgesamtbewertungszustand in der Überwachungsperiode 100 gesetzt ist. Diese Bedingung wird durch beide Systemkomponenten 4 in dem ersten Jahr erfüllt. In dem zweiten Jahr wird diese Bedingung nur von der oberen Systemkomponente 4 erfüllt, wohingegen die untere Systemkomponente 4 in jeder Intervallgesamtbewertung 10 als n.i.O.-Intervallgesamtbewertungszustand gesetzt ist.

Optional ergänzend kann die Periodengesamtbewertung auch auf den n.i.O.-Periodengesamtbewertungszustand gesetzt werden, wenn die letzte Intervallgesamtbewertung 10 als n.i.O.-Intervallgesamtbewertungszustand gesetzt wird.

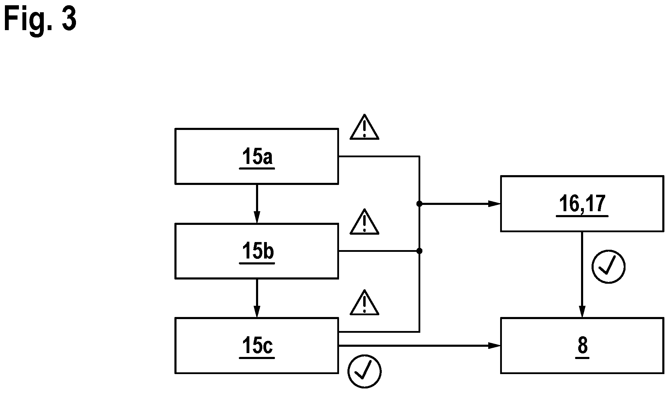

Beispielhaft sind vier Intervallgesamtbewertungen 10 für die Überwachungsperiode 100 gezeigt. Bei vereinfachten Ausführungsbeispielen kann auch nur die Periodengesamtbewertung als Gesamtbewertung durchgeführt werden, so dass die Periodengesamtbewertung und/oder die Intervallgesamtbewertung eine Gesamtbewertung bildet, wie diese in Zusammenhang mit der Figur 3 beschrieben wird.

Die Periodengesamtbewertungen werden dem Protokollmodul 9 übergeben, wobei diese in dem Protokollmodul 9 unveränderbar und/oder manipulationssicher gespeichert werden.

Das Verfahren hat den Vorteil, dass statt einer manuellen vor Ort Inspektion die Periodengesamtbewertung als eine jährliche Kontrolle der Systemkomponenten 4 durchgeführt werden kann.

Die Systemkomponenten 4 können als beliebige Systemkomponenten in dem Brandmeldesystem 2 ausgebildet sein:

### automatische Rauchansaugmeldern:

Bei Rauchansaugmeldern wird über ein Rohrsystem, dass in die zu schützenden Räume verlegt ist Luft in eine zentrale Auswerteeinheit gesaugt. Die Luft wird über spezielle Filter von groben Verunreinigungen befreit. Auch diese Melder werden durch Prüfgase zur Auslösung gebracht und die Filtereinheiten müssen visuell inspiziert werden auf Verunreinigung. Zusätzlich muss inspiziert werden, dass die Lufteinlässe offen sind und Rauch über das Rohrsystem angesaugt werden kann.

### Energieversorgungen:

Energieversorgungen für das Brandmeldesystem müssen über Batterien gepuffert werden, um während eines Ausfalls der Energieversorgung den weiteren Betrieb das Brandmeldesystem zu gewährleisten. Diese Batterien unterliegen Alterungsprozessen weswegen sie überprüft werden müssen. Der Service Techniker als Nutzer 18 führt dazu eine Messung der Versorgungsspannung und der Batteriespeicher durch.

### Schalteinrichtungen:

Für Schalteinrichtungen werden durch Besichtigung der LED-Anzeigeeinrichtungen visuell inspiziert oder durch Auslesen der Fehlerprotokolle der Brandmeldezentrale 6.

Die vor-Ort-Inspektion der Systemkomponenten 4 hat die folgenden Nachteile:
- Die Überprüfung vor Ort ist Zeit- und Kostenintensiv. Sie müssen durch ausgebildete Fachkräfte vorgenommen werden die aufgrund des aktuell herrschenden Fachkräftemangels nur bedingt zur Verfügung stehen.
- Die Überprüfungen finden nur punktuell statt. Die momentan als Stand der Technik definierten Prüfschritte, geben nur eine Auskunft über die Qualität der Installation zum Zeitpunkt der Überprüfung.
- Durch die Verwendung der Prüfgase kommt es zu einer vermeidbaren Belastung der Umwelt.
- Der Prozess der Überprüfung beim Kunden ist störend für den Endnutzer der Gebäude, da seine Arbeitsabläufe empfindlich gestört werden können (Betriebsunterbrechung, etc.)
- Die Prüfschritte erkennen nur zu dem Zeitpunkt vorliegende negative Einflüsse auf das Brandmeldesystem 2. Vor und nach der Prüfung finden nur reaktive erhaltende Maßnahmen statt, wenn sich anbahnende Fehler zu akuten Fehlern entwickelt haben.

Diese vor-Ort-Inspektionen können durch das Verfahren eingespart werden. Das Verfahren weist die folgenden Vorteile auf:
- Die Verfahren verwendet Condition Monitoring Daten als Inspektionsdaten und führt über Algorithmen eine kontinuierliche Prüfung der Systemkomponenten 4 sowie des Brandmeldesystems 2 durch, ohne dass ein Techniker vor Ort sein muss.
- Kontinuierliche Funktionsprüfung der selbstwartungsfähigen Systemkomponenten führt zu der Erkennung von punktuell wiederkehrenden Störgrößen. Darin resultiert ein höheres Qualitätslevel der Überwachung der Installationsqualität, verglichen mit der Wartung vor Ort.
- Ein weiterer positiver Aspekt ist, dass die Prüfgasprüfung nur vorliegende Störungen des optimalen Betriebszustandes der Installationsqualität aufzeigen kann, hingegen der vorgeschlagene Selbsttest Einflüsse des gesamten Betrachtungszeitraumes erkennt.
- Reduzierung der Zeit vor Ort der Techniker und somit entgegenwirken des Fachkräftemangels.
- Reduzierung der Umweltbelastung durch den Verzicht auf Prüfgas.
- Reduzierung der Kosten für die Ausführung der Inspektion.
- Verbesserung der Installationsqualität durch präventive Erkennung sich anbahnender Fehlfunktionen.
- Verbesserung des Kundenerlebnisses durch Verringerung der Störung der Betriebsabläufe.
- Das vorgeschlagene Verfahren ist rückwärtskompatibel und kann direkt ohne das Auswechseln von Produkten im Feld aktiviert werden.
- Durch das vorgeschlagene Verfahren werden nicht nur Brandmelder für den Selbsttest ertüchtigt, es werden auch weitere Komponenten wie Rauchansaugsysteme mit einbezogen.

Das Brandmeldesystem 2 besteht aus verschiedenen Komponenten. Im Wesentlichen sind diese folgendermaßen zu unterteilen:
- Brandmeldezentrale 6 (Panel)
- Peripherieelemente, über einen Bosch proprietären Feldbus (LSNi) als erstes Netzwerk 5 mit der Brandmeldezentrale 6 verbunden
- Subsysteme

Ziel des Verfahrens ist einen möglichst hohen Grad der Selbstüberwachung des Systems zu ermöglichen. In den folgenden Abschnitten werden dazu die einzelnen Komponenten, die in der Brandmeldeanordnung 1 enthalten sind, einzeln aufgeführt:
Das Brandmeldesystem 2 sendet Condition Monitoring Daten an ein Backend (Cloud Infrastruktur), an die Monitorzentrale 3 Eine Anzeige der Ergebnisse des Selbsttests erfolgt über Dashboards und Smartphone-Anwendungen als Anzeigeeinrichtungen.

Beispielhaft wird für eine Systemkomponente 4 ein Brandmelder diskutiert, welcher einen oder mehrere Sensoren zur Branddetektion aufweist.

Die Figur 3 zeigt ein schematisches Flussdiagramm zur Durchführung der Gesamtbewertung, also der Periodengesamtbewertung und/oder der Intervallgesamtbewertung einer der Systemkomponenten 4. Eine derartige Gesamtbewertung kann gemäß Schritt 14 automatisch einmal in der Überwachungsperiode 100 oder mehrmals in den Überwachungsintervallen 200 getriggert werden. Alternativ kann die Gesamtbewertung manuell initiiert werden.

Die Gesamtbewertung wird durch mehrere Einzelbewertungen 15 a, b, c gebildet, wobei für jede Einzelbewertung 15 a, b, c ein Einzelbewertungszustand insbesondere ein i.O.-Einzelbewertungszustand oder ein n.i.O.-Einzelbewertungszustand als Ergebnis der Einzelbewertung gesetzt werden kann. Für den Fall, dass mindestens eine der Einzelbewertungen 15 a, b, c der Gesamtbewertung als ein n.i.O.-Einzelbewertungszustand ausgebildet wird, wird die Gesamtbewertung automatisch auf einen n.i.O.-Gesamtbewertungszustand gesetzt.

Die Einzelbewertung 15 a ist als eine Monitorverbindungsbewertung zur Bewertung der Datenverbindung zwischen dem Brandmeldesystem 2 und der Monitorzentrale 3 ausgebildet. In dieser Einzelbewertung 15 a wird die Datenverfügbarkeit, die Datenkonsistenz, Datenqualität, die Datenverbindung und/oder die Datenresilienz der Inspektionsdaten geprüft. Damit wird zum einen ein Netzwerktest, insbesondere des zweiten Netzwerks 7, durchgeführt und optional ergänzend ein Verbindungstest von der Monitorzentrale 3 zu der jeweiligen Systemkomponente 4 durchgeführt.

In der Einzelbewertung 15 b wird ein Sensorfunktionstest der jeweiligen Sensoren in der Systemkomponente 4, hier ausgebildet als Brandmelder, durchgeführt. Beispielsweise kann bei den Sensoren ein optischer Weg, ein thermischer Weg, ein chemischer Weg und/oder eine EMV-Prüfung durchgeführt werden. Ergebnis der Einzelbewertung 15 b ist, ob die Sensoren in einem Funktionszustand sind.

Die Einzelbewertung 15 c ist als eine Systemverbindungsbewertung zur Bewertung der Datenverbindung in dem Brandmeldesystem 3 ausgebildet. Hierbei werden beispielsweise Totmann-Signale von der Systemkomponente 4 an die Brandmeldezentrale 6 gesendet, welche diese auswertet und die Auswertung als Teil der Inspektionsdaten an die Monitorzentrale 3 sendet.

Für den Fall, dass eine der Einzelbewertungen einen n.i.O.-Einzelbewertungszustand einnimmt, wird der zugehörige Gesamtbewertungszustand, insbesondere der Intervallgesamtbewertung und/oder die Periodengesamtbewertung in der Statusdatenbank 8 in einen n.i.O.-Bewertungszustand gesetzt.

Der n.i.O.-Gesamtbewertungszustand wird an ein Behebungsmodul 16 in der Monitorzentrale 3 gemeldet, welches ausgebildet ist, bei einer n.i.O.-Gesamtbewertung und/oder einer n.i.O.-Einzelbewertung mit einer Interaktionsanfrage eine Nutzerinteraktion zur Behebung der Ursache für den n. i. O. -Gesamtbewertungszustand und/oder den n. i. O. -Einzelbewertungszustand anzufordern. Beispielsweise wird die Interaktionsanfrage an ein Inspektionsplanungsmodul 17 übergeben, wobei das Inspektionsplanungsmodul 17 eine Zuordnung von Interaktionsanfragen zu den Systemkomponenten 4 aufweist.

Es ist vorgesehen, dass der Interaktionsanfrage eine Identifizierungsinformation der Systemkomponente 4 und eine Zustandsinformation über den n.i.O.-Einzelbewertungszustand zugeordnet ist. Mit diesen selektiven und spezifischen Informationen kann ein Nutzer 18 vor Ort eine Inspektion und gegebenenfalls eine Reparatur der Systemkomponente 4 durchführen. Es ist jedoch zu unterstreichen, dass der Nutzer 18 eine vor Ort Inspektion nur auf Aufforderung durchführen muss, eine jährliche Inspektion wird durch das geschilderte Verfahren ersetzt.

Nach der Inspektion und erfolgreicher Wartung oder Reparatur kann der Nutzer 18 manuell die Einzelbewertung und/oder die Gesamtbewertung ändern. Alternativ hierzu wird automatisiert oder getriggert eine weitere Ferninspektion durch die Monitorzentrale 3 durchgeführt und der Gesamtbewertungszustand, insbesondere der Intervallgesamtbewertung als i.O.-Gesamtbewertungszustand gesetzt.

Es ist vorgesehen, dass die Inspektionsdaten zur Ferninspektion für jedes Systemkomponente 4 mit einem zeitlichen Abstand zwischen 5 Minuten und 200 Minuten pro Datenpunkt bereitgestellt werden. Die Monitorzentrale 3 führt die Bewertung der Inspektionsdaten auf Basis von Zeitreihenanalysen der Inspektionsdaten durch.

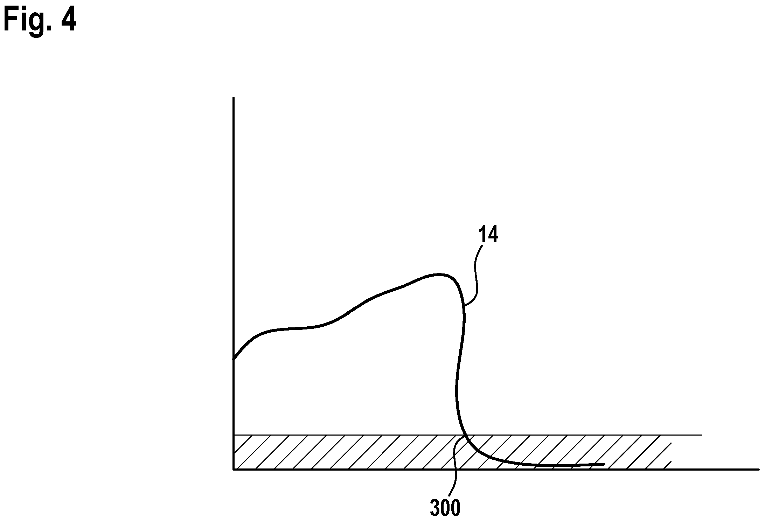

Beispielhaft ist in der Figur 4 eine Zeitreihe 14 für einen Funktionstest eines Sensors aufgetragen. Aus der Darstellung ist zu entnehmen, dass die Zeitreihe zunächst in einem erlaubten Bereich t < 300 verläuft und mit der Zeit in einen unerlaubten Bereich t > 300 eintritt, so dass der Einzelbewertungszustand mit Eintritt in den unerlaubten Bereich in einen n.i.O.-Einzelbewertungszustand geändert wird.

Durch die Verwendung von Daten über Zeiträume, ist eine kontinuierliche Überwachung des Brandmeldesystems 2 gegeben. Die konventionelle Prüfung stellt lediglich die Funktion des Systems zum Zeitpunkt der Prüfung fest. Sich anbahnende Fehler können optional präventiv behoben werden und können in die Bewertung der Selbsttestfunktion mit einbezogen werden.

## Patentansprüche

1. Verfahren zur Inspektion des Installationszustands von mindestens einer Systemkomponente (4) in einer Brandmeldeanordnung (1),
wobei die Brandmeldeanordnung (1) ein Brandmeldesystem (2), wobei das Brandmeldesystem (2) eine Vielzahl der Systemkomponenten (4) aufweist, sowie eine Monitorzentrale (3) umfasst,
wobei die Monitorzentrale (3) eine Ferninspektion des Installationszustands der Systemkomponente (4) auf Basis von Inspektionsdaten durchführt,
wobei die Monitorzentrale (3) eine Statusdatenbank (8) aufweist, wobei für die inspizierte Systemkomponente (4) in der Statusdatenbank (8) eine Periodengesamtbewertung für eine Überwachungsperiode (100) eingetragen wird,
wobei die Periodengesamtbewertung als i.O.-Periodengesamtbewertungszustand gesetzt wird, wenn die inspizierte Systemkomponente (4) sich in einem vorgebbaren Installationszustand befindet und als n.i.O.- Periodengesamtbewertungszustand gesetzt wird, wenn sich die inspizierte Systemkomponente (4) außerhalb des vorgebbaren Installationszustand befindet.

2. Verfahren nach Anspruch 1, **dadurch gekennzeichnet, dass** für die inspizierte Systemkomponente (4) in der Statusdatenbank (8) mehrere Intervallgesamtbewertungen (10) der Systemkomponente (4) jeweils für ein Überwachungsintervall (200) vorliegen oder eingetragen werden,
wobei die Überwachungsperiode (100) mehrere der Überwachungsintervalle (200) aufweist, wobei die Intervallgesamtbewertung (10) als i.O.-Intervallgesamtbewertungszustand gesetzt wird, wenn die inspizierte Systemkomponente (4) sich in dem vorgebbaren Installationszustand befindet und als n.i.O.- Intervallgesamtbewertungszustand gesetzt wird, wenn die sich inspizierte Systemkomponente (4) nicht in dem vorgebbaren Installationszustand befindet,
wobei die Periodengesamtbewertung als i.O.-Periodengesamtbewertungszustand gesetzt wird, wenn wenigstens einer der Intervallgesamtbewertungen (10) als i.O.- Intervallgesamtbewertungszustand in der Überwachungsperiode (100) gesetzt ist,
wobei optional vorgesehen ist, dass die Periodengesamtbewertung als n.i.O.-Periodengesamtbewertungszustand gesetzt wird, wenn die letzte Intervallgesamtbewertung (10) in der Überwachungsperiode als n.i.O.-Intervallgesamtbewertungszustand gesetzt ist.

3. Verfahren nach einem der vorhergehenden Ansprüche, **dadurch gekennzeichnet, dass** die Überwachungsperiode einem Jahr entspricht und/oder dass die Überwachungsintervalle länger als 1 Monat sind.

4. Verfahren nach einem der vorhergehenden Ansprüche, **dadurch gekennzeichnet, dass** die Periodengesamtbewertung und/oder die Intervallgesamtbewertung (10) als eine Gesamtbewertung aus einer Mehrzahl von Einzelbewertungen (15a,b,c) gebildet ist, wobei ein n.i.O.-Einzelbewertungszustand als Einzelbewertung (15a,b,c) automatisch zu einem n.i.O.-Gesamtbewertungszustand als Gesamtbewertung führt.

5. Verfahren nach einem der vorhergehenden Ansprüche, **dadurch gekennzeichnet, dass** ein i.O.- Gesamtbewertungszustand als Gesamtbewertung und/oder ein i.O.-Einzelbewertungszustand als Einzelbewertung (15a,b,c) automatisiert aktualisiert werden kann und/oder dass eine n.i.O.- Gesamtbewertungszustand als Gesamtbewertung und/oder ein n.i.O.-Einzelbewertungszustand als Einzelbewertung durch eine Nutzerinteraktion geändert werden kann.

6. Verfahren nach einem der vorhergehenden Ansprüche, **gekennzeichnet durch** ein Behebungsmodul (16), wobei das Behebungsmodul (16) ausgebildet ist, bei einer n.i.O.- Gesamtbewertung und/oder eine n.i.O.-Einzelbewertung mit einer Interaktionsanfrage eine Nutzerinteraktion zur Behebung der Ursache für den n.i.O.- Gesamtbewertungszustand und/oder den n.i.O.-Einzelbewertungszustand anzufordern.

7. Verfahren nach Anspruch 6, **gekennzeichnet durch** ein Inspektionsplanungsmoduls (17), wobei das Inspektionsplanungsmodul (17) eine Zuordnung von Interaktionsanfragen zu den Systemkomponenten (4) aufweist.

8. Verfahren nach Anspruch 6 oder 7, **dadurch gekennzeichnet, dass** der Interaktionsanfrage eine Identifizierungsinformation der Systemkomponente (4) und eine Zustandsinformation über den n.i.O.-Einzelbewertungszustand zugeordnet ist.

9. Verfahren nach einem der vorhergehenden Ansprüche, **dadurch gekennzeichnet, dass** nach der erfolgreichen Behebung der Ursache in Bezug auf die Interaktionsanfrage der n.i.O.- Einzelbewertungszustand und der zugeordnete n.i.O.- Gesamtbewertungszustand aufgehoben wird.

10. Verfahren nach Anspruch 9, **dadurch gekennzeichnet, dass** der Einzelbewertungszustand neu erfasst und/oder manuell eingetragen wird.

11. Verfahren nach einem der vorhergehenden Ansprüche, **dadurch gekennzeichnet, dass** die Einzelbewertung (15b) als eine Komponentenfunktionsbewertung zur Bewertung der Funktion der Systemkomponente (4) ausgebildet ist.

12. Verfahren nach einem der vorhergehenden Ansprüche, **dadurch gekennzeichnet, dass** die Einzelbewertung (15c) als eine Systemverbindungsbewertung zur Bewertung der Datenverbindung in dem Brandmeldesystem (2), insbesondere zur Bewertung der Datenverbindung der Systemkomponente (4), insbesondere zur Bewertung der Datenverbindung der Systemkomponente (4) zu einer Brandmeldezentrale (6), ausgebildet ist.

13. Verfahren nach einem der vorhergehenden Ansprüche, **dadurch gekennzeichnet, dass** die Einzelbewertung (15a) als eine Monitorverbindungsbewertung zur Bewertung der Datenverbindung zwischen dem Brandmeldesystem und der Monitorzentrale ausgebildet ist.

14. Verfahren nach einem der vorhergehenden Ansprüche, **dadurch gekennzeichnet, dass** die Systemkomponente (4) als ein Brandmelder ausgebildet ist.

15. Verfahren nach Anspruch 14, **dadurch gekennzeichnet, dass** die Gesamtbewertung des Brandmelders die Monitorverbindungsbewertung (15a), die Komponentenfunktionsbewertung (15b) und die Systemverbindungsbewertung (15c) umfasst.

16. Brandmeldeanordnung (1) und/oder Monitorzentrale (3) zur Ferninspektion eines Installationszustands einer Systemkomponente (4), wobei die Brandmeldeanordnung (1) und/oder die Monitorzentrale (3) eingerichtet ist, alle Schritte des Verfahrens nach einem der Ansprüche 1 bis 15 auszuführen.

17. Computerprogramm, welches eingerichtet ist, alle Schritte des Verfahrens nach einem der Ansprüche 1 bis 15 auszuführen.

18. Maschinenlesbares Speichermedium, insbesondere nichtflüchtiges maschinenlesbares Speichermedium, auf dem das Computerprogramm nach Anspruch 17 gespeichert ist.
